# EUROPEAN PATENT SPECIFICATION

(11) **EP 4 190 274 B1**
(45) Date of publication and mention of the grant of the patent: **16.10.2024**
(21) Application number: 22181867.7
(22) Date of filing: 29.06.2022
(51) Int. Cl.: A61C 1/00, A61C 1/05, A61C 1/12

(54) **DENTAL HANDPIECE**
DENTALHANDSTÜCK
PIÈCE À MAIN DENTAIRE

(30) Priority: 03.12.2021 JP 2021197173
(43) Date of publication of application: 07.06.2023
(73) Proprietor: Nakanishi Inc., Kanuma-shi, Tochigi 322-8666 (JP)
(72) Inventor: INOUE, Yamato, Kanuma-shi, 3228666 (JP); AYABE, Hiroshi, Kanuma-shi, 3228666 (JP)
(74) Representative: Lewis Silkin LLP

(56) References cited:
- WO-A1-2019/143105
- US-A- 4 521 189

## Description

### TECHNICAL FIELD

The present invention relates to a dental handpiece.

### BACKGROUND ART

Patent Literatures 1 and 2 disclose that a dental handpiece provided with a rotation mechanism such as an air turbine or an air motor driven to rotate by compressed air includes a pressure regulating mechanism that regulates a pressure of the compressed air to an appropriate range in order to reduce occurrences of damage to a dental treatment tool due to a high rotation speed of the rotation mechanism and wear due to a shortage of a lubricating oil.

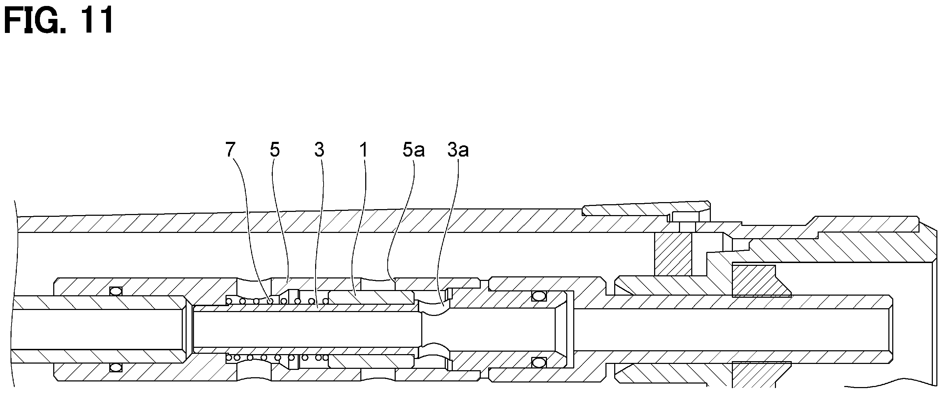

As shown in Fig. 11, a pressure regulating mechanism includes a cylindrical piston 1, an air supply pipe 3 is disposed inside the piston 1, and a case 5 is disposed outside the piston 1. The piston 1 is axially slidable between the air supply pipe 3 and the case 5, and is biased to one side in an axial direction by a coil spring 7 accommodated in the case 5. In this pressure regulating mechanism, when a pressure of compressed air is applied to an end surface of the piston 1 opposite to the coil spring 7 and the pressure becomes larger than an urging force of the coil spring 7, the piston 1 slides to the other side in the axial direction against the urging force of the coil spring 7. Then, a hole 5a formed in the case 5, which is normally closed by the piston 1, communicates with a hole 3a formed in the air supply pipe 3, and the compressed air supplied into the air supply pipe 3 passes through the holes 3a, 5a to outside of the case 5 to regulate the pressure.

Patent Literature 3 discloses a dental handpiece capable of regulating air pressure supplied to a head part. A coupling adapter is embedded in a body part of the handpiece and fastened to a coupling part so as to deliver compressed air and supply water to the head part, wherein the coupling adapter further has an air pressure regulating part having a discharge hole connected to an air supply passage and, when the pressure of the air supplied through an air supply pipe is a set pressure or higher, opens the discharge hole so as to enable the air pressure supplied through the air supply pipe to be maintained at a predetermined pressure or lower.

Patent Literature 4 discloses a further example of a dental handpiece.

### Citation list

### Patent Literature

Patent Literature 1: Japanese Patent No. 4147231
Patent Literature 2: Chinese Patent Application Publication No. 106491217
Patent Literature 3: WO 2019 143105 A1
Patent Literature 4: US 4521189 A

### SUMMARY OF THE INVENTION

Components such as the piston 1, the air supply pipe 3, and the case 5 constituting the pressure regulating mechanism described above are required to be processed with high accuracy such that a gap between the components is 10 µm or smaller, for example, in order to reduce a leakage of air. Therefore, a manufacturing cost increases.

Even if the components are processed with high accuracy, it is difficult to completely stop the leakage of air from the gap between the components. As a result, energy loss of the compressed air may occur and lead to a decrease in torque or rotational speed in a rotation mechanism.

In addition, since the structure has the cylindrical piston 1 slidable in the axial direction, an entire length may become long. Therefore, a large accommodation space may be required, which leads to an increase in a size of the entire handpiece.

An object of the present invention is to provide a dental handpiece that efficiently utilizes supply air energy and is miniaturized while reducing a manufacturing cost.

According to an aspect of the present invention, there is provided a dental handpiece according to claim 1. Preferable features are set out in the remaining claims.

According to the present disclosure, supply air energy is efficiently utilized and a size is reduced while reducing a manufacturing cost.

### BRIEF DESCRIPTION OF DRAWINGS

Fig. 1 is a side view of a gripping portion of a dental handpiece according to the present invention as viewed in a cross section along an axial direction.
Fig. 2 is a cross-sectional view of a head portion of the dental handpiece.
Fig. 3 is a cross-sectional view along the axial direction in vicinity of a rear end of the gripping portion of the dental handpiece.
Fig. 4 is a perspective view of a pressure regulating mechanism.
Fig. 5 is a cross-sectional view of the pressure regulating mechanism taken along the axial direction.
Fig. 6 is a cross-sectional view taken along a line VI-VI in Fig. 5.
Fig. 7 is a perspective view of a pressure regulating mechanism according to a first modification.
Fig. 8 is a cross-sectional view of the pressure regulating mechanism according to the first modification, taken along an axial direction.
Fig. 9 is a cross-sectional view taken along a line IX-IX in Fig. 8.
Fig. 10 is a cross-sectional view of a pressure regulating mechanism according to a second modification, taken along an axial direction.
Fig. 11 is a cross-sectional view along an axial direction in vicinity of a rear end of a gripping portion of a dental handpiece, showing a related-art pressure regulating mechanism.

### DESCRIPTION OF EMBODIMENTS

Hereinafter, an embodiment of the present invention will be described in detail with reference to the drawings.

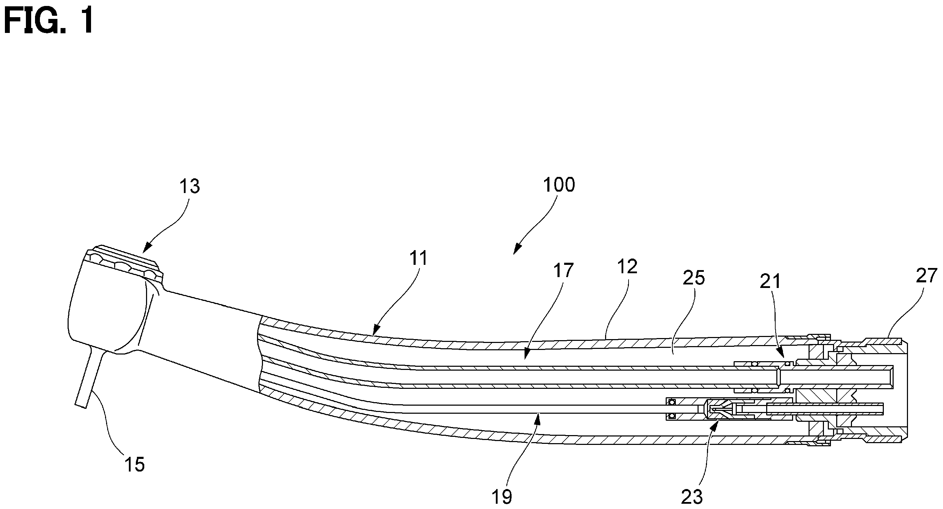

Fig. 1 is a side view of a gripping portion 11 of a dental handpiece 100 according to the present invention as viewed in a cross section along an axial direction.

As shown in Fig. 1, the dental handpiece 100 according to the present embodiment includes a gripping portion 11 and a head portion 13. The head portion 13 is provided at a front end of the gripping portion 11, and a dental treatment tool 15 is attached to the head portion 13. The dental handpiece 100 according to the present embodiment is an air turbine type handpiece in which the dental treatment tool 15 is rotated by compressed air.

The gripping portion 11 includes a case 12 formed in a cylindrical shape, and an air supply pipe 17 and a water supply pipe 19 are provided inside the case 12. The air supply pipe 17 includes a pressure regulating mechanism 21 on a rear end side thereof. The water supply pipe 19 includes a check valve 23 on a rear end side thereof. An internal space of the case 12 of the gripping portion 11 serves as an exhaust flow path 25.

A rear end of the gripping portion 11 serves as a connection portion 27, and a coupling member (not shown) is connected to the connection portion 27. A flexible tube (not shown) extending from a dental unit (not shown) that supplies compressed air and water is connected to the coupling member. Compressed air supplied from the dental unit is supplied to the air supply pipe 17 of the gripping portion 11. The compressed air supplied to the air supply pipe 17 passes through the pressure regulating mechanism 21 and is supplied toward the head portion 13. Water supplied from the dental unit is supplied to the water supply pipe 19 of the gripping portion 11. The water supplied to the water supply pipe 19 passes through the check valve 23 and is supplied toward the head portion 13. In the water supply pipe 19, backflow of water is reduced by the check valve 23.

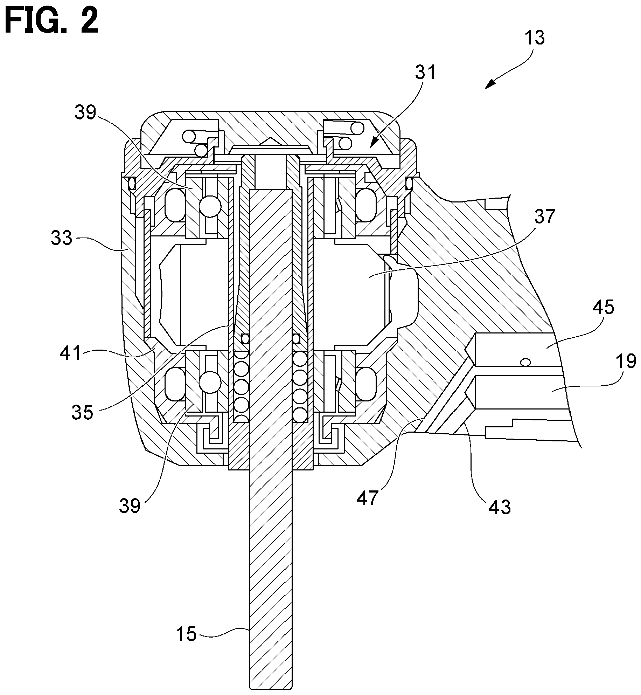

Fig. 2 is a cross-sectional view of the head portion 13 of the dental handpiece 100.

As shown in Fig. 2, the head portion 13 includes a head housing 33 that accommodates a rotation mechanism 31 therein. The rotation mechanism 31 includes a bar sleeve 35, a rotor 37, a pair of ball bearings 39, and a cartridge case 41.

The bar sleeve 35 detachably holds the rod-shaped dental treatment tool 15, and the rotor 37 is provided on an outer periphery of the bar sleeve 35. The pair of ball bearings 39 are provided in the cartridge case 41. Both end portions of the bar sleeve 35 are rotatably supported by the ball bearings 39.

In the head portion 13, the compressed air supplied from the air supply pipe 17 is blown to the rotor 37. Thereby, the bar sleeve 35 holding the dental treatment tool 15 is rotated. The compressed air blown to the rotor 37 is discharged from the head portion 13 to the exhaust flow path 25 formed by the internal space of the case 12 of the gripping portion 11.

A discharge port 43 communicating with the water supply pipe 19 is provided in a portion of the gripping portion 11 in vicinity of the head portion 13, and the water supplied from the water supply pipe 19 is discharged from the discharge port 43. An ejection port 47 communicating with a branch passage 45 branched from the air supply pipe 17 is provided at a position adjacent to the discharge port 43, and the compressed air supplied from the branch passage 45 is ejected from the ejection port 47. Thereby, in the dental handpiece 100, in vicinity of a front end of the head portion 13, the compressed air is ejected from the ejection port 47 together with the water discharged from the discharge port 43, so that the water can be ejected in a spray form.

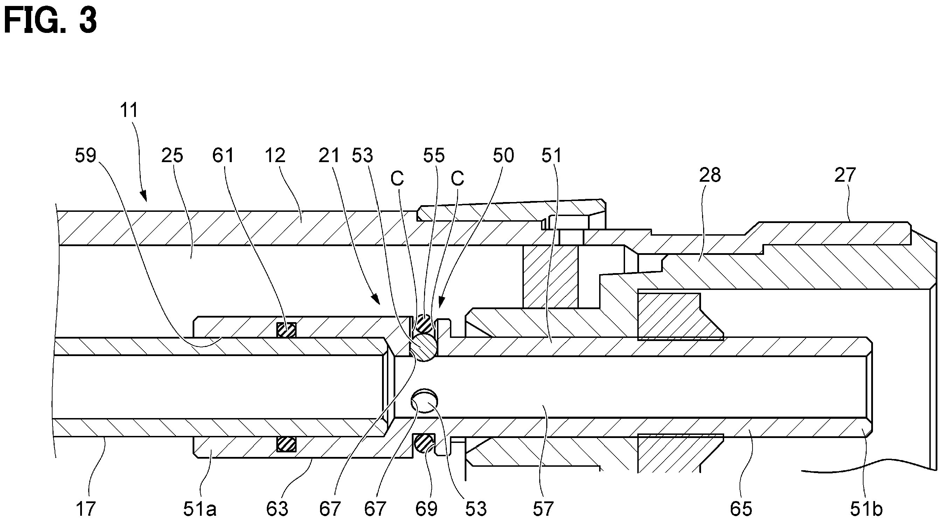

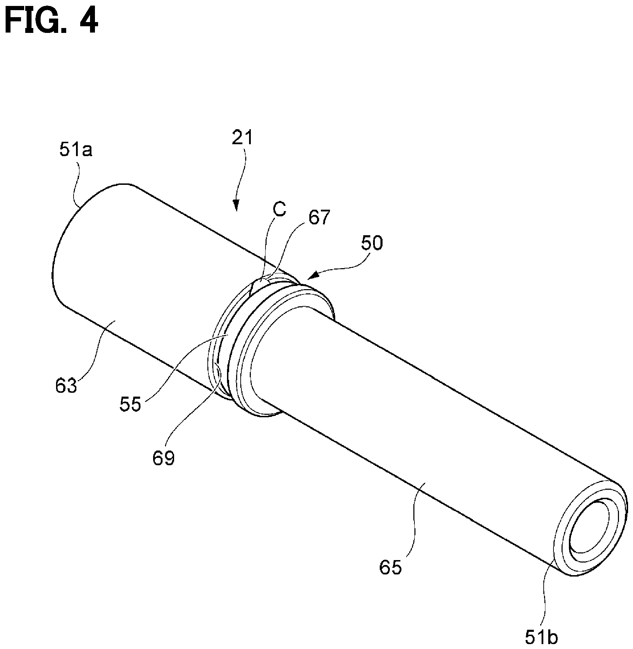

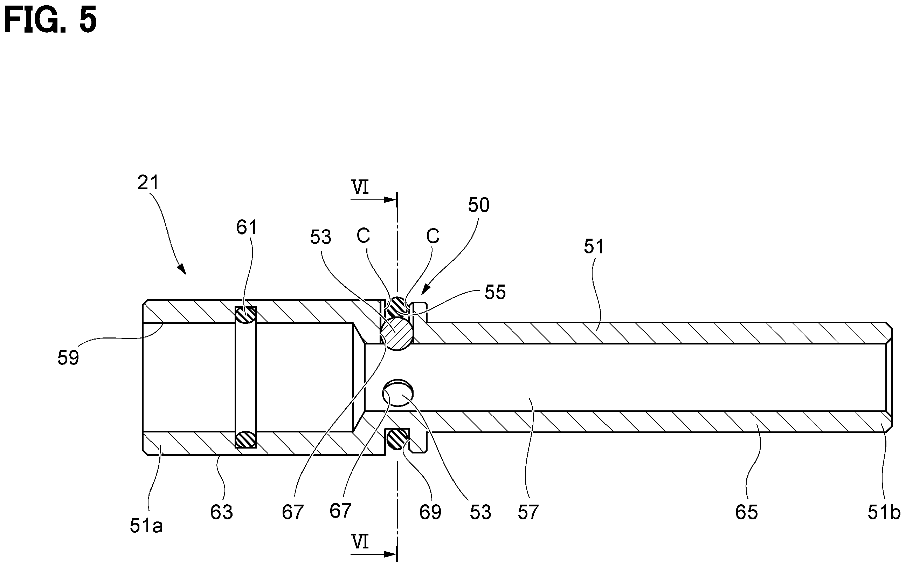

Fig. 3 is a cross-sectional view along the axial direction in vicinity of the rear end of the gripping portion 11 of the dental handpiece 100. Fig. 4 is a perspective view of the pressure regulating mechanism 21. Fig. 5 is a cross-sectional view of the pressure regulating mechanism 21 taken along the axial direction.

As shown in Figs. 3 to 5, the pressure regulating mechanism 21 provided in the air supply pipe 17 includes a pipe body 51 having a pressure regulating portion 50. The pressure regulating portion 50 of the pipe body 51 includes balls 53 and an annular elastic member 55.

The pipe body 51 is formed in a tubular shape including a flow path 57. In the pipe body 51 includes one end portion 51a to which the air supply pipe 17 is connected, and the other end portion 5 1b to which a connection portion (not shown) of an end portion of the flexible tube extending from the dental unit that supplies compressed air is connected. The other end portion 51b of the pipe body 51 is held by an adapter 28 constituting the connection portion 27 of the gripping portion 11.

The pipe body 51 includes a fitting hole 59 having an inner diameter larger than that of the flow path 57 on one end portion 51a side, and an end portion of the air supply pipe 17 is fitted and connected to the fitting hole 59. An O-ring 61 is provided in the fitting hole 59, and a gap between the fitting hole 59 and the air supply pipe 17 is sealed by the O-ring 61.

The pipe body 51 includes a large diameter portion 63 on the one end portion 51a side and a small diameter portion 65 formed to have a diameter smaller than that of the large diameter portion 63 on the other end portion 51b side.

The pipe body 51 is provided with the pressure regulating portion 50 at a position of the large diameter portion 63 in vicinity of the small diameter portion 65 side. The pressure regulating portion 50 includes a plurality of holes 67 penetrating a pipe wall of the pipe body 51 from front to back surfaces. In this example, the pipe body 51 includes three holes 67, and these holes 67 are formed at equal intervals in a circumferential direction. The balls 53 are accommodated in the holes 67, respectively.

A groove 69 is formed in an outer periphery of the large diameter portion 63 of the pressure regulating portion 50 of the pipe body 51. The groove 69 is formed in the circumferential direction at a position passing through positions where the holes 67 are formed. The groove 69 has a width smaller than a diameter of the ball 53 accommodated in the hole 67.

The annular elastic member 55 is made of, for example, an elastic material such as rubber, and is formed in an annular shape. The annular elastic member 55 is formed in a circular shape in cross section. For example, an O-ring may be used as the annular elastic member 55. The annular elastic member 55 is fitted to an outer periphery of the pipe body 51, and is accommodated in the groove 69 formed in the large diameter portion 63. The annular elastic member 55 fitted to the outer periphery of the pipe body 51 and accommodated in the groove 69 is accommodated in the groove 69 without protruding from an outer peripheral surface of the pipe body 51, and positional deviation in an axial direction of the pipe body 51 is reduced.

In a state where the annular elastic member 55 is accommodated in the groove 69, a clearance C is formed between the annular elastic member 55 accommodated in the groove 69 and an inner peripheral surface of the hole 67 at a position on the outer periphery of pipe body 51 where the hole 67 is formed.

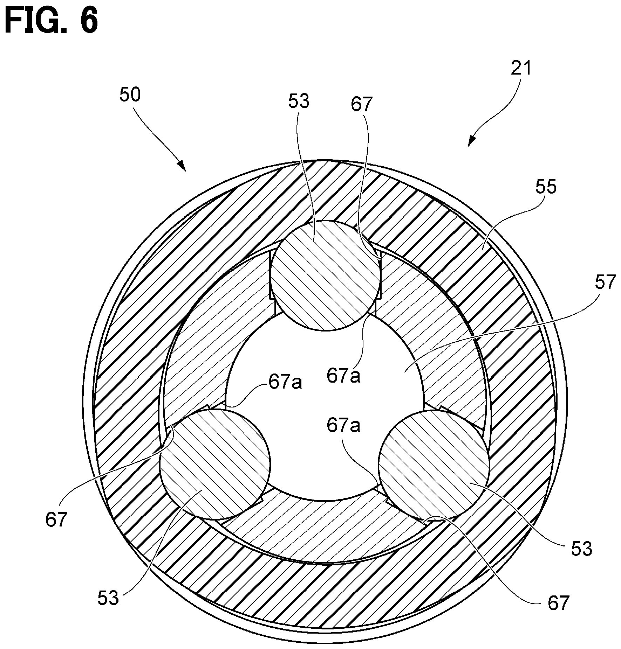

Fig. 6 is a cross-sectional view taken along a line VI-VI in Fig. 5.

As shown in Fig. 6, the hole 67 formed in the pressure regulating portion 50 of the pipe body 51 includes a small diameter hole 67a having an inner diameter smaller than a diameter of the ball 53 on an inner peripheral side of the pipe body 51. The ball 53 is accommodated in the hole 67 from an outer peripheral side of the pipe body 51. The ball 53 accommodated in the hole 67 is locked to the small diameter hole 67a on the inner peripheral side of the pipe body 51 in the hole 67, and movement of the pipe body 51 to the inner peripheral side is restricted.

The ball 53 accommodated in each hole 67 is urged toward the inner peripheral side of the pipe body 51 by an elastic force of the annular elastic member 55 fitted to the outer periphery of the pipe body 51 and accommodated in the groove 69. Thereby, the ball 53 accommodated in each hole 67 is brought into a state of abutting against an edge portion of the small diameter hole 67a of the hole 67, and each hole 67 is maintained in a state of being closed by the ball 53.

In the dental handpiece 100 including the pressure regulating mechanism 21 having the above-described structure, compressed air is supplied from the dental unit through the flexible tube connected by the coupling member. The supplied compressed air passes through the pipe body 51 constituting the pressure regulating mechanism 21 and is supplied to the air supply pipe 17. Then, in the head portion 13, the compressed air is blown from the air supply pipe 17 to the rotor 37, and the bar sleeve 35 holding the dental treatment tool 15 is rotated. The compressed air blown to the rotor 37 is discharged from the head portion 13 to the exhaust flow path 25 formed by the internal space of the case 12 of the gripping portion 11, and is discharged to a dental unit side through an exhaust path of the flexible tube.

At this time, the compressed air may be supplied from the dental unit at a pressure exceeding an appropriate range. In this case, in the pressure regulating mechanism 21, as an internal pressure of the air supply pipe 17 increases, the ball 53 accommodated in each hole 67 of the pressure regulating portion 50 of the pipe body 51 is displaced outward in a radial direction of the pipe body 51 against a urging force of the annular elastic member 55. Then, each of the balls 53 is separated from the edge portion of the small diameter hole 67a of the hole 67, the compressed air in the pipe body 51 flows out from a gap between the hole 67 and the ball 53 to the exhaust flow path 25 on the outer peripheral side of the pipe body 51, and the internal pressure of the air supply pipe 17 is maintained in an appropriate range.

As described above, according to the dental handpiece 100 of the present embodiment, since a pressure of the supplied compressed air is maintained in the appropriate range by the pressure regulating part 50 of the pressure regulating mechanism 21 provided in the air supply pipe 17, in the rotation mechanism 31, occurrences of damage to the dental treatment tool 15 due to a high rotation speed of the bar sleeve 35 and wear due to a shortage of a lubricating oil are avoided.

The pressure regulating portion 50 of the pressure regulating mechanism 21 has a structure in which the ball 53 is accommodated in the hole 67 formed in the pipe body 51, and the ball 53 is biased from the outer peripheral side by the annular elastic member 55 fitted to the pipe body 51. Therefore, the number of components is be reduced and a cost of the component itself is reduced as compared with a pressure regulating mechanism having a related-art structure in which compressed air is regulated by a piston slidable in an axial direction.

Since there is no component that slides in the axial direction, a length in the axial direction may be shortened to reduce a size, and accommodating is easily performed in a narrow space in the gripping portion 11.

It is possible to avoid a loss of supply air energy due to a leakage of the compressed air from a gap between the components.

In the above embodiment, the pressure regulating portion 50 is provided in the pipe body 51 separate from the air supply pipe 17, but the pressure regulating mechanism 21 may be configured by providing the pressure regulating portion 50 in a pipe body formed of the air supply pipe 17. According to this structure, the number of components is further reduced.

Next, a modification of the pressure regulating mechanism provided in the dental handpiece 100 will be described. Components the same as those of the pressure regulating mechanism 21 according to the above-described embodiment are denoted by the same reference numerals, and description thereof will be omitted.

### (Modification 1)

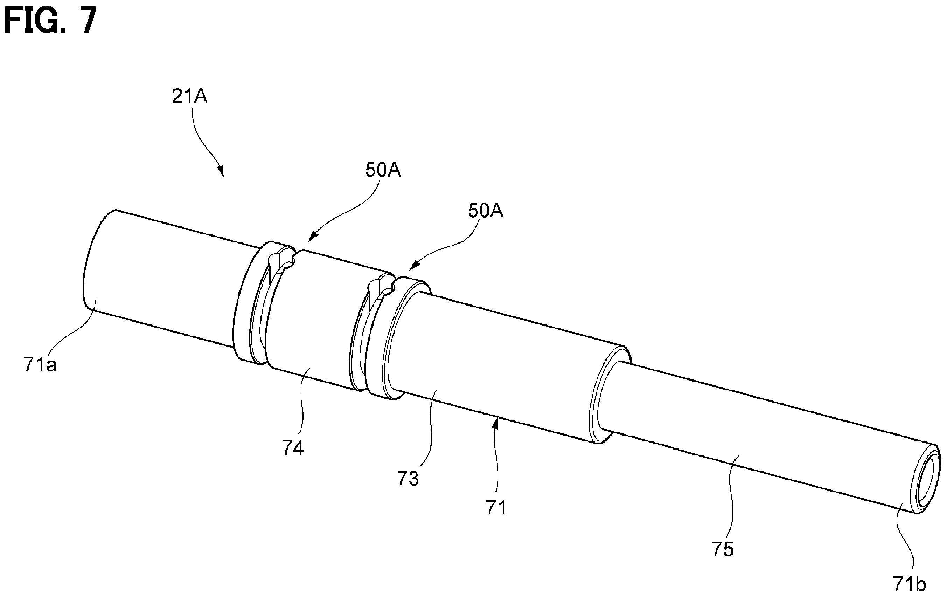

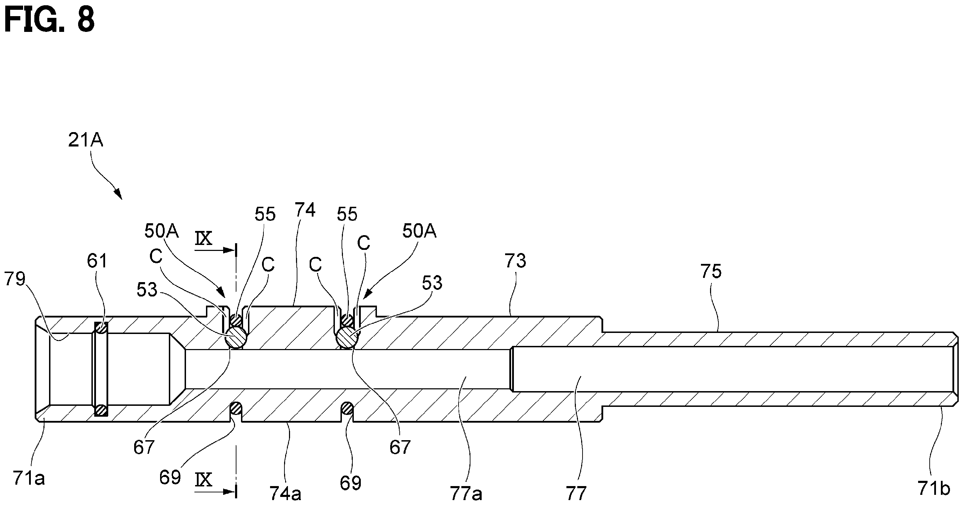

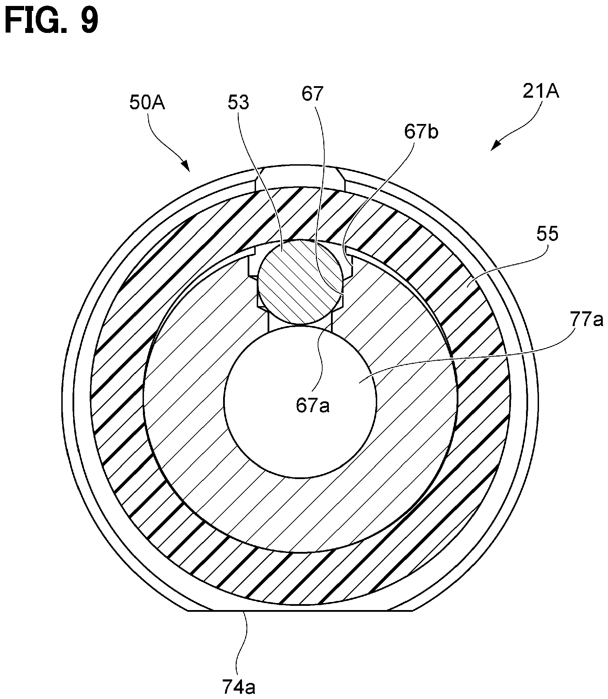

Fig. 7 is a perspective view of a pressure regulating mechanism 21A according to a first modification. Fig. 8 is a cross-sectional view of the pressure regulating mechanism 21A according to the first modification, taken along an axial direction. Fig. 9 is a cross-sectional view taken along a line IX-IX in Fig. 8.

As shown in Figs. 7 and 8, the pressure regulating mechanism 21A according to the first modification includes a pipe body 71 including two pressure regulating portions 50A.

The pipe body 71 is formed in a tubular shape including a flow path 77. The pipe body 71 includes one end portion 71a to which the air supply pipe 17 is connected, and the other end portion 71b to which a connection portion of a flexible tube extending from a dental unit that supplies compressed air is connected.

The pipe body 71 includes a fitting hole 79 in which the O-ring 61 is provided on one end portion 71a side, and an end portion of the air supply pipe 17 is fitted and connected to the fitting hole 79. The flow path 77 of the pipe body 71 includes a small diameter flow path portion 77a on a fitting hole 79 side.

The pipe body 71 includes an intermediate diameter portion 73 on the one end portion 71a side, and a small diameter portion 75 formed to have a diameter smaller than that of the intermediate diameter portion 73 on the other end portion 71b side. In the pipe body 71, an intermediate portion of the intermediate diameter portion 73 in the axial direction is formed as a large diameter portion 74 having a larger diameter. The two pressure regulating portions 50A are provided in the large diameter portion 74 of the pipe body 71, and are disposed at an interval in the axial direction. A relief portion 74a for avoiding interference with the water supply pipe 19 is formed in a portion of the large diameter portion 74 of the pipe body 71 at a water supply pipe 19 side.

The pressure regulating portion 50A includes one hole 67 that accommodates the ball 53, and a groove 69 having a width smaller than a diameter of the ball 53 is formed at a position passing through a position where the one hole 67 is formed. The annular elastic member 55 is accommodated in the groove 69.

As shown in Fig. 9, the hole 67 formed in the pipe body 71 includes a small diameter hole 67a on an inner peripheral side of the pipe body 71, and further includes a large diameter hole 67b on an outer peripheral side of the pipe body 71. The ball 53 accommodated in the hole 67 from the outer peripheral side of the pipe body 71 is locked to the small diameter hole 67a on the inner peripheral side of the pipe body 71 in the hole 67, and movement of the pipe body 71 to the inner peripheral side is restricted. In the pressure regulating portion 50A, the ball 53 is urged by an elastic force of the annular elastic member 55 to abut against an edge portion of the small diameter hole 67a of the hole 67, whereby the hole 67 is maintained in a state of being closed by the ball 53.

In the pressure regulating mechanism 21A according to the first modification, when compressed air is supplied from the dental unit at a pressure exceeding an appropriate range, the ball 53 accommodated in the hole 67 of each pressure regulating portion 50A of the pressure regulating mechanism 21A is displaced outward in a radial direction of the pipe body 71 against an urging force of the annular elastic member 55. Thereby, the ball 53 is separated from the edge portion of the small diameter hole 67a of the hole 67, and the compressed air in the pipe body 71 flows out from a gap between the hole 67 and the ball 53 to the exhaust flow path 25 on the outer peripheral side of the pipe body 71.

Each pressure regulating portion 50A regulates a pressure in the one hole 67 that accommodates the ball 53. Therefore, the large diameter hole 67b is formed on the outer peripheral side of the pipe body 71 in the hole 67, and air is easily discharged at the time of pressure regulation. For the same purpose, a material of the annular elastic member 55 may be selected to adjust the elastic force, so that the air can be easily released at the time of pressure regulation.

As described above, also in a case of the pressure regulating mechanism 21A according to the first modification, when the compressed air exceeds the appropriate range, the compressed air is discharged from each pressure regulating portion 50A provided in the pipe body 71, and thus an internal pressure of the air supply pipe 17 is maintained in the appropriate range. Thereby, in the rotation mechanism 31, occurrences of damage to the dental treatment tool 15 due to a high rotation speed of the bar sleeve 35 and wear due to a shortage of a lubricating oil are reduced.

In the pressure regulating mechanism 21A according to the first modification, the ball 53 biased by the annular elastic member 55 is accommodated in the one hole 67 of each pressure regulating portion 50A, so that a structure is simplified.

Since the plurality of pressure regulating portions 50A are provided at the interval in the axial direction of the pipe body 71, redundancy is provided in a pressure regulating function, and safety is enhanced.

### (Modification 2)

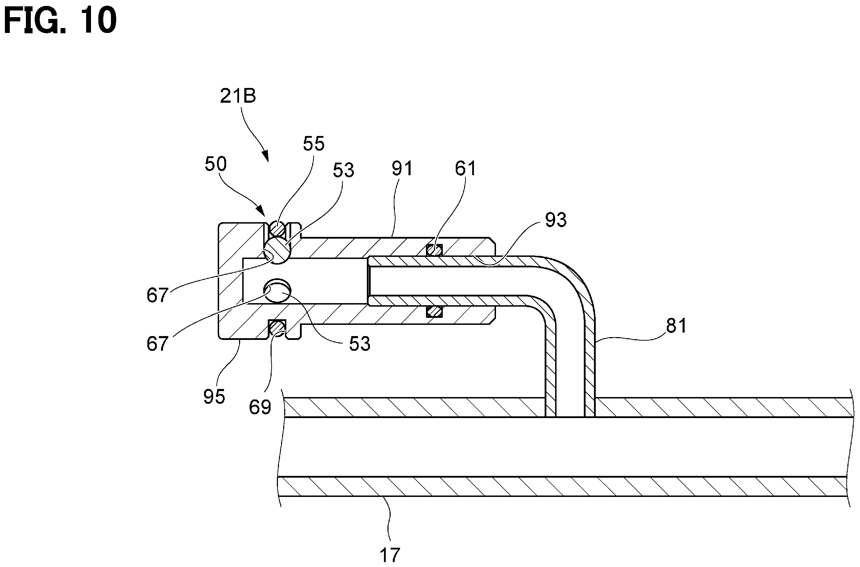

Fig. 10 is a cross-sectional view of a pressure regulating mechanism 21B according to a second modification, taken along an axial direction.

As shown in Fig. 10, the pressure regulating mechanism 21B according to the second modification is attached to a branch pipe 81 provided in the air supply pipe 17. One end of the branch pipe 81 is connected to the air supply pipe 17, and an intermediate portion thereof is bent and extends along the air supply pipe 17. The pressure regulating mechanism 21B is connected to the other end of the branch pipe 81.

The pressure regulating mechanism 21B includes a pipe body 91, and the pressure regulating portion 50 is provided in the pipe body 91. The pipe body 91 is formed in a bottomed tubular shape. The pipe body 91 includes a fitting hole 93 provided with the O-ring 61, and an end portion of the branch pipe 81 branched from the air supply pipe 17 is fitted and connected to the fitting hole 93. The pipe body 91 includes a large diameter portion 95 on an end portion side opposite to a connection side with the branch pipe 81, and the large diameter portion 95 is provided with the pressure regulating portion 50 in which the balls 53 are accommodated in three holes 67 and the balls 53 are biased by the annular elastic member 55.

In the pressure regulating mechanism 21B according to the second modification, when compressed air is supplied from a dental unit at a pressure exceeding an appropriate range, an internal pressure of the pipe body 91 of the pressure regulating mechanism 21B connected to the branch pipe 81 increases, and the balls 53 accommodated in the respective holes 67 of the pressure regulating portion 50 are displaced outward in a radial direction of the pipe body 91 against an urging force of the annular elastic member 55. As a result, each ball 53 is separated from the edge portion of the small diameter hole 67a of the hole 67, the compressed air in the pipe body 91 flows out from a gap between the hole 67 and the ball 53 to the exhaust flow path 25 on an outer peripheral side of the pipe body 91, and an internal pressure of the air supply pipe 17 is maintained in an appropriate range.

As described above, also in a case of the pressure regulating mechanism 21B according to the second modification, when the compressed air exceeds the appropriate range, the compressed air is discharged from the pressure regulating portion 50 provided in the pipe body 91, and thus the internal pressure of the air supply pipe 17 is maintained in the appropriate range. Thereby, in the rotation mechanism 31, occurrences of damage to the dental treatment tool 15 due to a high rotation speed of the bar sleeve 35 and wear due to a shortage of a lubricating oil are reduced.

Since the pressure regulating mechanism 21B according to the second modification is provided in the branch pipe 81 branched from the air supply pipe 17, a supply path of the compressed air may be shortened, and an entire length of the dental handpiece 100 may be further shortened.

In the second modification, the pressure regulating portion 50 may be provided in a branch pipe that branches off from the air supply pipe 17 and further joins the air supply pipe 17. In this case, the compressed air branched from the air supply pipe 17 to the branch pipe passes through the pressure regulating portion 50 of the branch pipe and joins the air supply pipe 17.

As described above, the present invention is not limited to the above-described embodiment, and combinations of the configurations of the embodiment and modifications and applications by those skilled in the art based on the description of the specification and well-known techniques are also intended to be made by the present invention and are included in the scope required for protection.

As described above, the following matters are disclosed in the present specification.
(1) A dental handpiece comprising:
   a head portion including a bar sleeve that detachably holds a dental treatment tool, and a rotation mechanism that rotates the bar sleeve by supplied compressed air; and
   a tubular gripping portion including a front end provided with the head portion and an air supply pipe that supplies the compressed air to the rotation mechanism,
   wherein the air supply pipe includes a pressure regulating portion that regulates a pressure of the compressed air, and
   wherein the pressure regulating portion includes a pipe body through which the compressed air passes, a hole penetrating a pipe wall of the pipe body, a ball accommodated in the hole to close the hole, and an annular elastic member that is fitted to the pipe body and urges the ball from an outer peripheral side of the pipe body.

According to this dental handpiece, when a pressure of the supplied compressed air exceeds an appropriate range in the pressure regulating portion provided in the air supply pipe, the ball accommodated in the hole is displaced outward in a radial driection of the pipe body against an urging force of the annular elastic member by the pressure. Thereby, the compressed air in the pipe body flows out to the outer peripheral side of the pipe body from a gap between the hole and the ball, and the pressure of the compressed air is maintained in the appropriate range. Thereby, in the rotation mechanism, occurrences of damage to the dental treatment tool due to a high rotation speed of the bar sleeve and wear due to a shortage of a lubricating oil are reduced.

The pressure regulating portion has a structure in which the ball is accommodated in the hole formed in the pipe body, and the ball is biased from the outer peripheral side by the annular elastic member fitted to the pipe body. Therefore, the number of components isreduced and a cost of the component itself is reduced as compared with a pressure regulating mechanism having a related-art structure in which compressed air is regulated by a piston slidable in an axial direction.

Since there is no component that slides in the axial direction, a length in the axial direction may be shortened to reduce a size, and accommodating is easily performed in a narrow space in the gripping portion.

It is possible to avoid a loss of supply air energy due to a leakage of the compressed air from a gap between the components.

As described above, according to the dental handpiece of the present invention, the supply air energy is efficiently utilized and the dental handpiece is miniaturized while reducing a manufacturing cost.

(2) The dental handpiece according to (1),
wherein a pressure regulating mechanism including the pressure regulating portion is connected to the air supply pipe.

According to this dental handpiece, a pressure regulating function is easily provided to the air supply pipe by the pressure regulating portion of the pressure regulating mechanism connected to the air supply pipe.

(3) The dental handpiece according to (1) or (2),
wherein a plurality of the holes are formed in the pipe body at intervals in a circumferential direction,
wherein the ball is accommodated in each of the holes, and
wherein the ball is urged by the annular elastic member from the outer peripheral side of the pipe body.

According to the dental handpiece, the balls are accommodated in the plurality of holes formed at intervals in the circumferential direction, and the balls are pressed from the outer peripheral side of the pipe body by the annular elastic member. Therefore, when the pressure of the compressed air exceeds the appropriate range, the balls in the holes are displaced, and the pressure of the compressed air may be rapidly reduced.

(4) The dental handpiece according to any one of (1) to (3),
wherein the hole includes a small diameter hole having a diameter smaller than a diameter of the ball on an inner peripheral side of the pipe body, and
wherein the ball is accommodated in the hole from the outer peripheral side of the pipe body and is locked to the small diameter hole.

According to this dental handpiece, the ball accommodated in the hole is locked by the small diameter hole, so that the ball is arranged at an appropriate position of the hole.

(5) The dental handpiece according to any one of (1) to (4),
wherein a groove having a width smaller than the diameter of the ball is formed on an outer periphery of the pipe body in the circumferential direction at a position passing through a position where the hole is formed, and
wherein the annular elastic member is accommodated in the groove.

According to this dental handpiece, a clearance is formed between the annular elastic member accommodated in the groove and an inner peripheral surface of the hole at a position on the outer periphery of the pipe body where the hole is formed. Thereby, the compressed air is smoothly discharged from the clearance.

(6) The dental handpiece according to any one of (1) to (5),
wherein a plurality of the pressure regulating portions are provided at intervals in an axial direction of the pipe body.

According to this dental handpiece, since the plurality of pressure regulating portions are provided at intervals in the axial direction of the pipe body, redundancy is provided in the pressure regulating function, and safety is enhanced.

(7) The dental handpiece according to any one of (1) to (6),
wherein the pressure regulating portion is provided in a branch pipe branched from the air supply pipe.

According to this dental handpiece, since the pressure regulating portion is provided in the branch pipe branched from the air supply pipe, a supply path of the compressed air may be shortened, and an entire length of the dental handpiece may be shortened.

### Reference Signs List

- 11: gripping portion
- 13: head portion
- 15: dental treatment tool
- 17: air supply pipe
- 21, 21A, 21B: pressure regulating mechanism
- 31: rotation mechanism
- 35: bar sleeve
- 50, 50A: pressure regulating portion
- 51, 71, 91: pipe body
- 53: ball
- 55: annular elastic member
- 67: hole
- 67a: small diameter hole
- 69: groove
- 81: branch pipe
- 100: dental handpiece

## Claims

1. A dental handpiece (100) comprising:
a head portion (13) including a bar sleeve (35) that is configured to detachably hold a dental treatment tool (15), and a rotation mechanism (31) that is configured to rotate the bar sleeve by compressed air; and
a tubular gripping portion (11) including a front end provided on which the head portion (13) is disposed and an air supply pipe (17) that is configured to supply the compressed air to the rotation mechanism (31),
wherein the air supply pipe (17) includes a pressure regulating portion (50; 50A) that regulates a pressure of the compressed air in the air supply pipe, and
the pressure regulating portion includes:
a pipe body (51; 71; 91) through which the compressed air passes; and
a hole (67) penetrating a pipe wall of the pipe body;
**characterised in that** the pressure regulating portion further includes:
a ball (53) accommodated in the hole to close the hole; and
an annular elastic member (55) that is fitted to the pipe body and urges the ball from an outer peripheral side of the pipe body.

2. The dental handpiece (100) according to claim 1,
wherein the pressure regulating portion (50; 50A) is included in a pressure regulating mechanism (21; 21A; 21B) which is configured to be connected to the air supply pipe (17).

3. The dental handpiece (100) according to claim 1 or 2,
wherein the pressure regulating portion (50) further includes a second hole (67) penetrating the pipe wall and a second ball (53) accommodated in the second hole to close the second hole,
the hole and the second hole are aligned in a circumferential direction of the pipe body, and
the second ball is urged by the annular elastic member (55) from the outer peripheral side of the pipe body.

4. The dental handpiece (100) according to any one of claims 1 to 3,
wherein the hole (67) includes a small diameter hole (67a) having a diameter smaller than a diameter of the ball on an inner peripheral side of the pipe body, and
the ball is accommodated in the hole, configured to enter the hole from the outer peripheral side of the pipe body, and locked to the small diameter hole.

5. The dental handpiece (100) according to any one of claims 1 to 4,
wherein the pipe body (51; 71; 91) includes a groove (69) having a width smaller than the diameter of the ball on an outer periphery of the pipe body in the circumferential direction at a position corresponding to the hole (67), and
the annular elastic member (55) is accommodated in the groove.

6. The dental handpiece according to any one of claims 1 to 5,
wherein the air supply pipe (17) further includes a second pressure regulating portion (50A) that regulates the pressure of the compressed air in the air supply pipe,
the pressure regulating portion (50A) and the second pressure regulating portion (50A) are disposed along an axial direction of the pipe body (71).

7. The dental handpiece (100) according to any one of claims 1 to 6,
wherein the air supply pipe (17) includes a branch pipe (81), and
the pressure regulating portion (50) is provided on the branch pipe.

## Patentansprüche

1. Dentalhandstück (100), umfassend:
einen Kopfabschnitt (13), der eine Stangenhülse (35), die dazu konfiguriert ist, ein Zahnbehandlungsinstrument (15) abnehmbar zu halten, und einen Rotationsmechanismus (31), der dazu konfiguriert ist, die Stangenhülse mit Druckluft zu drehen, umfasst; und
einen röhrenförmigen Greifabschnitt (11), der ein vorderes Ende, an dem bereitgestellt der Kopfabschnitt (13) angeordnet ist, und eine Luftzufuhröhre (17), die dazu konfiguriert ist, die Druckluft dem Rotationsmechanismus (31) zuzuführen, umfasst,
wobei die Luftzufuhrröhre (17) einen Druckregulierungsabschnitt (50; 50A) umfasst, der einen Druck der Druckluft in der Luftzufuhrröhre reguliert, und
der Druckregulierungsabschnitt umfasst:
einen Röhrenkörper (51; 71; 91), durch den die Druckluft geht; und
ein Loch (67), das in eine Röhrenwand des Röhrenkörpers eindringt;
**dadurch gekennzeichnet, dass** der Druckregulierungsabschnitt ferner umfasst:
eine Kugel (53), die in dem Loch aufgenommen ist, um das Loch zu schließen; und
ein ringförmiges elastisches Element (55), das auf den Röhrenkörper aufgesetzt ist und die Kugel von einer äußeren Peripherieseite des Röhrenkörpers aus verdrängt.

2. Dentalhandstück (100) nach Anspruch 1,
wobei der Druckregulierungsabschnitt (50; 50A) in einem Druckregulierungsmechanismus (21; 21A; 21B) enthalten ist, der dazu konfiguriert ist, an die Luftzufuhrröhre (17) angeschlossen zu sein.

3. Dentalhandstück (100) nach Anspruch 1 oder 2,
wobei der Druckregulierungsabschnitt (50) ferner ein zweites Loch (67), das in die Röhrenwand eindringt, und eine zweite Kugel (53), die in dem zweiten Loch aufgenommen ist, um das zweite Loch zu schließen, umfasst,
das Loch und das zweite Loch in einer Umfangsrichtung des Röhrenkörpers ausgerichtet sind, und
die zweite Kugel von dem ringförmigen elastischen Element (55) von der äußeren Peripherieseite des Röhrenkörpers aus verdrängt wird.

4. Dentalhandstück (100) nach einem der Ansprüche 1 bis 3,
wobei das Loch (67) ein Loch (67a) mit kleinem Durchmesser umfasst, das einen Durchmesser aufweist, der kleiner als ein Durchmesser der Kugel auf einer inneren Peripherieseite des Röhrenkörpers ist, und
die Kugel in dem Loch aufgenommen ist, dazu konfiguriert ist, in das Loch von der äußeren Peripherieseite des Röhrenkörpers aus einzutreten, und in dem Loch mit kleinem Durchmesser blockiert ist.

5. Dentalhandstück (100) nach einem der Ansprüche 1 bis 4,
wobei der Röhrenkörper (51; 71; 91) eine Rille (69) umfasst, die eine Breite aufweist, die kleiner als der Durchmesser der Kugel auf einer äußeren Peripherie des Röhrenkörpers in der Umfangsrichtung in einer Position, die dem Loch (67) entspricht, ist, und
das ringförmige elastische Element (55) in der Rille aufgenommen ist.

6. Dentalhandstück nach einem der Ansprüche 1 bis 5,
wobei die Luftzufuhrröhre (17) ferner einen zweiten Druckregulierungsabschnitt (50A) umfasst, der den Druck der Druckluft in der Luftzufuhrröhre reguliert,
der Druckregulierungsabschnitt (50A) und der zweite Druckregulierungsabschnitt (50A) entlang einer axialen Richtung des Röhrenkörpers (71) angeordnet sind.

7. Dentalhandstück (100) nach einem der Ansprüche 1 bis 6,
wobei die Luftzufuhrröhre (17) eine Zweigröhre (81) umfasst, und
der Druckregulierungsabschnitt (50) auf der Zweigröhre bereitgestellt wird.

## Revendications

1. Pièce à main dentaire (100) comprenant :
une section de tête (13) comprenant un manchon de barre (35) configuré pour maintenir de manière amovible un outil de traitement dentaire (15), et un mécanisme de rotation (31) configuré pour faire tourner le manchon de barre par de l'air comprimé
une section de préhension tubulaire (11) comprenant une extrémité avant sur laquelle est disposée la section tête (13) et un tuyau d'alimentation en air (17) configuré pour alimenter en air comprimé le mécanisme de rotation (31),
le tuyau d'alimentation en air (17) comprenant une section de régulation de pression (50 ; 50A) qui régule une pression de l'air comprimé dans le tuyau d'alimentation en air, et
la section de régulation de pression comprend :
un corps de tuyau (51 ; 71 ; 91) à travers lequel passe l'air comprimé ; et
un trou (67) pénétrant dans une paroi de tuyau du corps de tuyau ;
**caractérisé en ce que** la section de régulation de pression comprend en outre :
une bille (53) logée dans le trou pour fermer le trou ; et
un élément élastique annulaire (55) qui est ajusté sur le corps de tuyau et pousse la bille à partir d'un côté périphérique extérieur du corps de tuyau.

2. Pièce à main dentaire (100) selon la revendication 1,
la section de régulation de pression (50 ; 50A) est incluse dans un mécanisme de régulation de pression (21 ; 21A ; 21B) qui est configuré pour être connecté au tuyau d'alimentation en air (17).

3. Pièce à main dentaire (100) selon la revendication 1 ou 2,
dans lequel la section de régulation de pression (50) comprend en outre un second trou (67) pénétrant dans la paroi du tuyau et une seconde bille (53) logée dans le second trou pour fermer le second trou,
le trou et le second trou sont alignés dans une direction circonférentielle du corps de tuyau, et
la seconde bille est poussée par l'élément élastique annulaire (55) depuis le côté périphérique extérieur du corps de tuyau.

4. Pièce à main dentaire (100) selon l'une quelconque des revendications 1 à 3,
dans laquelle le trou (67) comprend un trou de petit diamètre (67a) ayant un diamètre inférieur à un diamètre de la bille sur un côté périphérique intérieur du corps de tuyau, et
la bille est logée dans le trou, configurée pour pénétrer dans le trou à partir du côté périphérique extérieur du corps de tuyau, et verrouillée dans le trou de petit diamètre.

5. Pièce à main dentaire (100) selon l'une quelconque des revendications 1 à 4,
dans laquelle le corps de tuyau (51 ; 71 ; 91) comprend une rainure (69) ayant une largeur inférieure au diamètre de la bille sur une périphérie extérieure du corps de tuyau dans la direction circonférentielle à une position correspondant au trou (67), et
l'élément élastique annulaire (55) est logé dans la rainure.

6. Pièce à main dentaire selon l'une quelconque des revendications 1 à 5,
dans laquelle le tuyau d'alimentation en air (17) comprend en outre une seconde section de régulation de pression (50A) qui régule la pression de l'air comprimé dans le tuyau d'alimentation en air,
la section de régulation de pression (50A) et la seconde section de régulation de pression (50A) sont disposées le long d'une direction axiale du corps de tuyau (71).

7. Pièce à main dentaire (100) selon l'une quelconque des revendications 1 à 6,
dans laquelle le tuyau d'alimentation en air (17) comprend un tuyau de dérivation (81), et
la section de régulation de pression (50) est disposée sur le tuyau de dérivation.
